Europäisches Patentamt

European Patent Office

Office européen des brevets

(19)

(11) Veröffentlichungsnummer : **0 204 936**
**B1**

(12)

# EUROPÄISCHE PATENTSCHRIFT

(45) Veröffentlichungstag der Patentschrift :
28.09.88

(51) Int. Cl.⁴ : **G 01 G 19/32**

(21) Anmeldenummer : 86105699.2

(22) Anmeldetag : 24.04.86

(54) Vorrichtung zum gravimetrischen Dosieren fliessfähiger Produkte.

(30) Priorität : 08.06.85 DE 3520657

(43) Veröffentlichungstag der Anmeldung :
17.12.86 Patentblatt 86/51

(45) Bekanntmachung des Hinweises auf die Patenterteilung : 28.09.88 Patentblatt 88/39

(84) Benannte Vertragsstaaten :
DE FR GB

(56) Entgegenhaltungen :
EP-A- 0 032 460
DE-A- 3 201 221
US-A- 2 893 601

(73) Patentinhaber : AZO GmbH & Co

D-6960 Osterburken (DE)

(72) Erfinder : Baumann, Rudolf
Galgensteige 47
D-6960 Osterburken (DE)

(74) Vertreter : Dr.-Ing. Hans Lichti Dipl.-Ing. Heiner Lichti
Dipl.-Phys. Dr. Jost Lempert
Postfach 41 07 60 Durlacher Strasse 31
D-7500 Karlsruhe 41 (DE)

EP 0 204 936 B1

Jouve, 18, rue St-Denis, 75001 Paris, France

## Beschreibung

Die Erfindung betrifft eine Vorrichtung zum gravimetrischen Dosieren fließfähiger Produktkomponenten, von denen wenigstens eine eine Flüssigkeit ist, zur Herstellung von Mischungen mit gegebenenfalls wechselnden Gewichtsanteilen der Komponenten.

Die Herstellung von Mischungen fließfähiger Produkte mit unterschiedlichen Fließverhalten spielt in der Verfahrenstechnik eine große Rolle. Dabei kann die Herstellung der Mischung chargenweise oder kontinuierlich erfolgen und es können hierfür gesonderte Mischer vorgesehen werden, aus denen die Mischung abgezogen und der Weiterverarbeitung zugeführt wird, oder aber kann die Mischung unmittelbar in einer Verarbeitungsmaschine, z. B. einem Extruder od. dgl. erzeugt werden. Unter dem eingangs erwähnten Begriff Mischeinrichtung wird deshalb jede Art von Mischer bzw. Verarbeitungsmaschine verstanden, in der solche Mischungen hergestellt werden.

In der Massenproduktion werden die einzelnen Komponenten in der Regel in Vorratsbehältern gehalten, aus denen sie einem Wiegebehälter zugeführt und nach dem Verwiegen an die Mischeinrichtung abgegeben werden. Dabei können sämtliche Komponenten entsprechend der Mischungsrezeptur nacheinander im Additionsverfahren in den Wiegebehälter eingespeist und nach Erreichen des Gesamtgewichtes gemeinsam in die Mischeinrichtung ausgetragen werden.

Eine bekannte Vorrichtung der letztgenannten Art (DE-OS 20 34 983) dient dazu, rieselfähige Schüttgüter verschiedener Art und/oder physikalischer Eigenschaften zusammenzuführen und zu mischen. In jeder Förderleitung sitzt unmittelbar vor dem Abscheidebehälter ein Absperrventil. Um eine genaue Dosierung, auch bei kleinsten Dosiermengen, zu erreichen, sind die Absperrventile in etwa gleichem Abstand zum Einlauf in den Wiegebehälter angeordnet, so daß der beim Absperren in der Leitung noch befindliche Nachlauf für alle Komponenten gleich ist. Dieses Verfahren, insbesondere das Einleiten in einen einzigen Wiegebehälter setzt ein annähernd gleiches physikalisches Verhalten der Komponenten hinsichtlich Förderfähigkeit, Rieselfähigkeit etc. voraus, um einerseits für sämtliche Komponenten eine gleiche Fördertechnik einsetzen zu können, andererseits eine einwandfreie Entleerung des Wiegebehälters nach jedem Wiegevorgang zu gewährleisten.

Es ist weiterhin bekannt, jede einzelne Komponente getrennt zu verwiegen und die Komponenten erst nach dem Wiegevorgang, ggfls. erst in der Mischeinrichtung, zusammenzuführen. Hierbei wird jeder Vorratsbehälter oder aber ein größerer Wiegebehälter mit Entnahmevorrichtung einer Waage zugeordnet, das Ausgangsgewicht festgestellt und die Entnahmevorrichtung solange in Betrieb gesetzt, bis die gewünschte Menge der Komponente ausgetragen worden ist, woraufhin die Entnahmevorrichtung stillgesetzt wird. Dies bringt naturgemäß einen erheblichen Bauaufwand mit sich. Auf der anderen Seite ist es in vielen Anwendungsfällen die einzige Möglichkeit der Dosierung, vor allem dann, wenn die Komponenten sehr unterschiedliche physikalische Eigenschaften aufweisen, wie dies beispielsweise bei Mischungen aus Flüssigkeiten sehr unterschiedlicher Viskosität oder aus rieselfähigen Komponenten einerseits und flüssigen Komponenten andererseits mit ggfls. noch stark unterschiedlicher Viskosität der Fall ist. Insbesondere bei Flüssigkeiten hoher Viskosität ergeben sich Probleme durch die geringe Fließgeschwindigkeit und die starke Abhängigkeit der Fließgeschwindigkeit von den geometrischen Gegenbenheiten (geneigte Flächen und Leitungen gegenüber senkrechten Flächen und Leitungen).

Der Erfindung liegt die Aufgabe zugrunde, eine Vorrichtung des eingangs genannten Aufbaus dahingehend weiterzuentwickeln, daß Komponenten mit ausgeprägt unterschiedlichem Fließverhalten, ggfls. auch unterschiedlicher physikalischer Konsistenz (fest und rieselfähig bzw. flüssig) bei geringem konstruktiven Aufwand gravimetrisch genau dosiert und in einem exakten Mischungsverhältnis zusammengeführt werden können.

Diese Aufgabe wird erfindungsgemäß nach dem Anspruch gelöst.

Durch die erfindungsgemäße Ausbildung ist eine exakte gravimetrische Dosierung einer im Prinzip beliebigen Anzahl von Komponenten unterschiedlicher Art und Konsistenz in einem weiten Gewichtsbereich möglich. Dies vor allem deshalb, weil für jede Komponente zwischen dem Vorratsbehälter und der Mischeinrichtung ein eigenes System mit Förderleitungen und Wiegebehälter vorgesehen ist, sodaß diese Systeme hinsichtlich der Art der Förderung und ihres konstruktiven Aufbaus jeweils an die physikalischen Eigenschaften, insbesondere an das Fließverhalten der Komponenten angepaßt werden können. Die Verwiegung jeder einzelnen Komponente erfolgt im Subtraktionsverfahren, d. h. es ist sichergestellt, daß nur diejenige Menge in das Mischungsverhältnis eingeht, die tatsächlich den Wiegebehälter auch verlassen hat. Dabei wird die Genauigkeit der Dosierung noch maßgeblich dadurch beeinflusst, daß die Absperrventile sämtlicher Komponenten nahe der Mischeinrichtung angeordnet sind, sodaß unabhängig von der Leitungslänge zwischen Wiegebehälter und Mischeinrichtung, die nicht für alle Komponenten gleichgehalten werden kann, gewährleistet ist, daß für alle Komponenten auch derjenige Produktanteil, der sich zwischen Wiegegefäß und Mischeinrichtung befindet, das Dosierergebnis nicht verfälscht. Dabei wird davon ausgegangen, was in der Praxis der Fall ist, daß die Austragsleitungen stets mit der jeweiligen Komponente gefüllt sind. Diese exakte Dosierung über einen großen Gewichtsbereich ist gleichwohl mit nur einem geringen Bauaufwand verknüpft, da es sich bei den Wiegebehältern um einfache Gefäße handelt, für die sämtlich aber nur ein einziges Wiegegestell und eine einzige Waage erforderlich ist.

Gemäß einer bevorzugten Ausführungsform sind die Wiegebehälter als geschlossene Behälter ausgebildet und aufgabeseitig jeweils an eine Druckluftquelle zum Austragen der Komponenten angeschlossen.

Mittels der Druckluft erfolgt die Austragung jeder Komponente aus dem Wiegebehälter in die Mischeinrichtung. Diese Förderung ist insbesondere bei schwerfließenden Komponenten, insbesondere bei Flüssigkeiten hoher Viskosität sehr vorteilhaft, weil hiermit die Fließgeschwindigkeit unterstützt wird und ein einwandfreies Ausfließen in die Mischeinrichtung auch noch bei engen Querschnitten möglich ist, ohne daß die Genauigkeit der Verwiegung beeinträchtigt wird. Bei einem reinen Schwerkraftaustrag müssten demgegenüber größere Leitungsquerschnitte und eine entsprechende konstruktive Ausbildung (keine waagerechten oder zu schwach geneigten Leitungen etc.) vorgesehen werden. Auch die Fließgeschwindigkeit läßt sich mit dieser Förderung so beschleunigen, daß der Wiegevorgang in kurzer Zeit durchgeführt werden kann.

Um den Wiegevorgang zu automatisieren, kann die Waage für jede Komponente eine Sollwertvorgabe aufweisen, bei deren Erreichen das Absperrventil für die entsprechende Komponente geschlossen wird, wodurch sichergestellt ist, daß die den Wiegebehälter verlassenden Komponentenmenge auch das Absperrventil passiert und in die Mischeinrichtung gelangt.

Gemäß einem weiteren vorteilhaften Ausführungsbeispiel ist vorgesehen, daß in jeder Förderleitung zwischen dem Vorratsbehälter und dem Wiegebehälter Zulaufventile und in jeder Anschlußleitung der Wiegebehälter an die Druckluftquelle Druckluftventile angeordnet sind, die zusammen mit den Absperrventilen nahe der Mischeinrichtung in einem Steuerkreis liegen, der für jede Komponente — ggfls. programmgesteuert — zu Beginn eines Wiegevorgangs nacheinander das Druckluftventil und das Absperrventil öffnet, nach Erreichen des Sollwertes beide Ventile schließt und nach Erreichen des Sollwertes für die letzte Komponente die Zulaufventile für alle Komponenten öffnet, so daß das Austragen und Nachfüllen der Wiegebehälter völlig automatisiert ablaufen kann.

Gemäß einer vorteilhaften Ausführungsform werden die Wiegebehälter nach jedem Dosiervorgang aus den Vorratsbehältern aufgefüllt. Durch diese Maßnahme liegen für jeden Wiegevorgang reproduzierbare Verhältnisse vor, indem die Waage bei jedem Wiegevorgang stets vom Maximalgewicht, den sämtliche Behälter aufnehmen können, also quasi einer Art Nullstellung ausgeht und für jede einzelne Komponente beliebige Gewichtsanteile vorgegeben werden können.

Vorteilhaft ist jeder Wiegebehälter mit einem Füllstandsmesser als Vollmelder versehen. Mit den Füllstandsmessern kann die Zuführung der Produktkomponenten entsprechend gesteuert werden. Diese Füllstandsmesser können in ihrer Funktion als Vollmelder die Zuführung der Komponenten selbsttätig unterbrechen.

Eine andere vorteilhafte Ausführungsform sieht vor, daß zwischen jedem Vorratsbehälter und dem ihm zugeordneten Wiegebehälter eine Rücklaufleitung vorgesehen ist, und daß den Wiegebehältern die entsprechenden Produktkomponenten solange zugeführt werden, bis das Gesamtgewicht aller Komponenten an der Waage erreicht ist.

Jeder Wiegebehälter liegt demgemäß in einer Art Kreislauf und die einem einzelnen Wiegebehälter zu viel zugeführte Produktkomponente gelangt über die Rücklaufleitung wieder in den jeweils zugeordneten Vorratsbehälter solange zurück, bis der letzte Wiegebehälter mit der entsprechenden Produktkomponente aufgefüllt ist. Dies erspart jeweils die Einzelabschaltung der gefüllten Wiegebehälter und verhindert zudem deren Überfüllung.

Eine Automatisierung dieses Füllvorgangs kann dadurch erreicht werden, daß die Waage einen bis Erreichen des Gesamtgewichts wirksam werdenden Endschalter zum Absperren der Förderleitungen und Stillsetzen der Pumpen od. dgl. aufweist.

Um die Förderung der Komponenten aus den Vorratsbehältern nicht durch die Druckvorlage in den Wiegebehältern zu beeinträchtigen, ist ferner vorgesehen, daß jeder Wiegebehälter mit dem entsprechenden Vorratsbehälter über eine Druckausgleichsleitung verbunden ist.

Der Druckausgleich zwischen Wiegebehältern und Vorratsbehälter kann jedoch auch dadurch erfolgen, daß als Druckausgleichsleitung die Rücklaufleitung dient.

Schließlich weisen mit Vorteil sämtliche Leitungen nahe den Wiegebehältern einen horizontalen, biegsamen Leitungsabschnitt auf, um einerseits eine freie Beweglichkeit der Wiegebehälter bzw. des Wiegegestells zu gewährleisten, andererseits Rückstoßkräfte aus dem Fördervorgang weitgehend von der Wiegemechanik fernzuhalten.

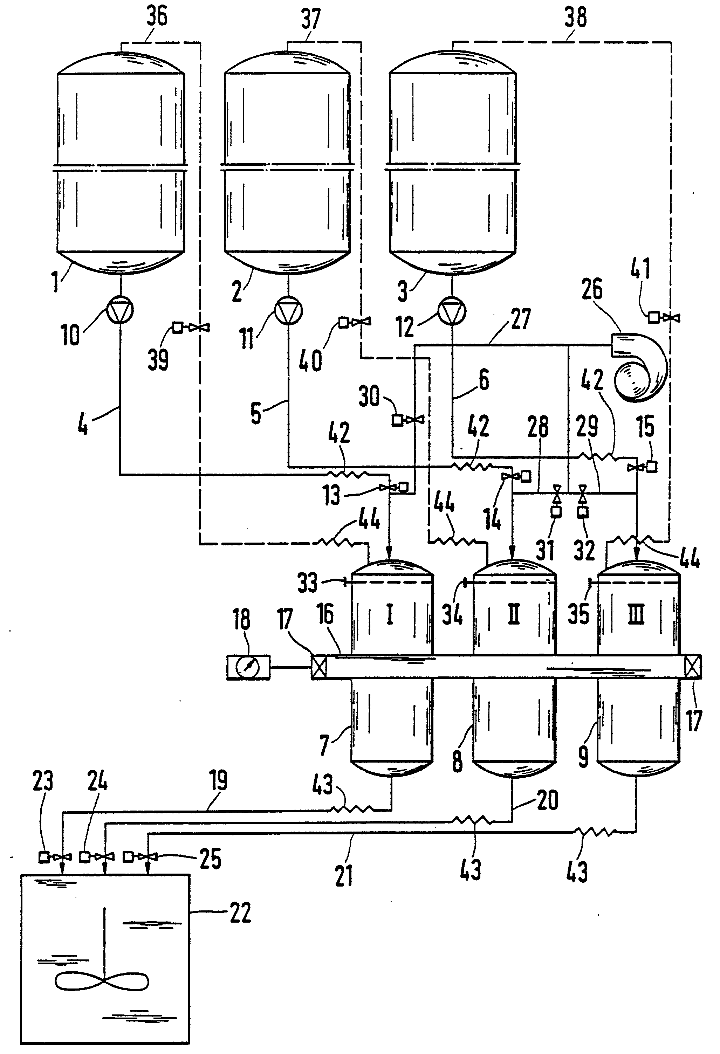

Nachstehend ist die Erfindung anhand eines in der Zeichnung schematisch wiedergegebenen Ausführungsbeispiels beschrieben.

In der Zeichnung sind drei Vorratsbehälter 1, 2 und 3 erkennbar, die jeweils eine Komponente I, II und III einer aus diesen drei Komponenten herzustellenden Mischung enthalten.

Jeder Vorratsbehälter 1, 2 und 3 ist über eine Förderleitung 4, 5, 6 an je ein Wiegegefäß 7, 8, 9 angeschlossen, wobei es sich im Einzelfall um Förderleitungen handeln kann, in denen die Komponenten auf unterschiedliche mechanische Art und Weise gefördert werden, z. B. mittels Druckluft, Pumpen oder auch durch Schwerkraft. Ggfls. kann die Art der Förderung an die physikalischen Eigenschaften und die Konsistenz der jeweiligen Komponente angepaßt sein. Beim gezeigten Ausführungsbeispiel, bei dem unterstellt sei, daß alle drei Komponenten zähflüssig sind, erfolgt die Förderung mittels Pumpen 10, 11, 12, die unmittelbar unterhalb des Vorratsbehälters angeordnet sind. Es sind folglich auch in den Förderleitungen 4, 5 und 6 nahe den Wiegebehältern 7, 8 und 9 Zuflußventile 13, 14 und 15 angeordnet, mittels der der Zufluß zu dem einzelen Wiegebehälter abgesperrt werden kann.

Die Wiegebehälter 7, 8 und 9 sitzen in einem gemeinsamen Wiegegestell 16 einer Waage, deren Waagenlager mit 17 und deren Anzeige mit 18 angedeutet ist. Jeder Wiegebehälter ist austragsseitig über eine Leitung 19, 20 und 21 mit einer Mischeinrichtung 22 verbunden, wobei nahe der Mischeinrichtung in jeder Leitung ein Absperrventil 23, 24 und 25 angeordnet ist. Der Austrag der Komponenten I, II und III aus den Wiegebehältern 7, 8 und 9 kann wiederum auf beliebige Weise erfolgen. Vorzugsweise geschieht dies jedoch, wie in der Zeichnung angedeutet, mittels Druckluft, die aus einer Quelle, z. B. einem Gebläse 26 über Leitungen 27, 28 und 29 an je einen der Wiegebehälter angeschlossen ist. In jeder der Leitungen 27, 28, 29 sitzt wiederum ein Absperrventil 30, 31 und 32. Die Druckluft wirkt auf die Oberfläche der in den Wiegebehältern 7, 8 und 9 befindlichen Komponenten, sodaß jede Komponente über die Leitung 19, 20 und 21 mittels Druck in die Mischeinrichtung 22 gefördert werden kann.

Jeder Wiegebehälter 7, 8 und 9 ist mit einem Füllstandsmesser in Form eines Vollmelders 33, 34 und 35 versehen, mittels dessen sichergestellt ist, daß vor jedem Wiegevorgang die Wiegebehälter aus den Vorratsbehältern 1, 2 und 3 bis zu einer definierten Höhe gefüllt werden. Schließlich ist jeder Wiegebehälter 7, 8 und 9 über eine Rücklaufleitung 36, 37 und 38 mit dem ihm jeweils zugeordneten Vorratsbehälter 1, 2 und 3 verbunden. In jeder Rücklaufleitung sitzt wiederum ein Absperrventil 39, 40 bzw. 41.

Um Reaktionskräfte aus den Förder-, Austragsvorgängen von der Wiegemechanik fernzuhalten, weisen die Förderleitungen 4, 5 und 6, die Austragleitungen 19, 20, 21 sowie die Rücklaufleitungen 36, 37 und 38 in unmittelbarer Nähe des Wiegebehälters jeweils einen horizontalen Leitungsabschnitt auf, wie dies aus den Zeichnungen erkennbar ist. Ferner ist in diesem horizontalen Leitungsabschnitt unmittelbar in dem Bereich der Wiegebehälter jeweils ein biegsamer Leitungsabschnitt 42, 43 bzw. 44 vorgesehen, der eine freie Beweglichkeit des Wiegegestells 16 gewährleistet.

Vor jedem Wiegevorgang sind die Wiegebehälter 7, 8 und 9 aus den Vorratsbehältern 1, 2 und 3 mit den Komponenten I, II und III bis zum Füllstandsmesser 33, 34 bzw. 35 aufgefüllt worden. Der eigentliche Wiegevorgang geht dann so vor sich, daß bei geschlossenen Zulaufventilen 13, 14 und 15 die Druckluftventile 30, 31 und 32 geöffnet werden, sodaß die Wiegebehälter unter Druck stehen. Die Anzeige 18 der Waage befindet sich in der Nullstellung. Es wird dann zunächst das Absperrventil 23 in der Austragsleitung 19 des Wiegebehälters 7 geöffnet, bis die Komponente I in dem gewünschten Gewichtsanteil aus dem Wiegebehälter 7 herausgedrückt worden und in die Mischeinrichtung 22 gelangt ist. Danach wird das Absperrventil 23 geschlossen. In gleicher Weise wird mit den Komponenten II und III verfahren, bis die Gewichtsanteile aller Komponenten entsprechend der Mischrezeptur in die Mischeinrichtung 22 gelangt sind. Danach werden die Ventile 39, 40, 41 in den Rücklaufleitungen 36, 37 und 38 sowie die Zulaufventile 13, 14 und 15 geöffnet und die Pumpen 10, 11 und 12 in Betrieb gesetzt, bis die Wiegebehälter 7, 8 und 9 wiederum bis zum Füllstandsmesser 33 gefüllt sind. Jeder Füllstandsmesser, der als Vollmelder wirksam ist, schaltet — ggfls. zu unterschiedlichen Zeiten — die Pumpen 10, 11 und 12 ab, sodaß ein neuer Wiegevorgang durchgeführt werden kann.

Eine andere Ausführungsform sieht vor, daß die Pumpen 10, 11 und 12 so lange arbeiten, bis alle Wiegebehälter 7, 8 und 9 aufgefüllt sind und dann gleichzeitig abschalten. Die von den Pumpen 10, 11 und 12 zuviel geförderte Menge der Komponenten I, II und/oder III wird bei vollem Wiegebehälter über die Rücklaufleitung 36, 37 und 38 wieder in den entsprechenden Vorratsbehälter 1, 2 und 3, ggfls. auch längere Zeit im Kreislauf gefördert, bis schließlich alle Wiegebehälter gefüllt sind und die Waage das vorgegebene Gesamtgewicht anzeigt. Durch einen Endschalter od. dgl. können dann die Pumpen 10, 11, 12 stillgesetzt und die Ventile 13, 14, 15 geschlossen werden.

Über eine entsprechende Sollwertvorgabe an der Waage für jede einzelne Komponente und mittels eines entsprechenden Steuerkreises, der ggfls. programmiert arbeitet, kann das Verwiegen und Nachfüllen völlig automatisiert ablaufen.

**Patentansprüche**

1. Vorrichtung zum gravimetrischen Dosieren fließfähiger Produktkomponenten (I, II, III), von denen wenigstens eine eine Flüssigkeit ist, zur Herstellung von Mischungen mit gegebenenfalls wechselnden Gewichtsanteilen der Komponenten, bestehend aus die Komponenten enthaltenden Vorratsbehältern (1, 2, 3), einer Waage sowie Absperrventilen (23, 24, 25) zum Unterbrechen der jeweiligen Komponentenströmung nach dem Wiegevorgang, wobei für jede Komponente ein Wiegebehälter (7, 8, 9) vorgesehen ist und jeder Wiegebehälter mit je einem der Vorratsbehälter (1, 2, 3) und mit einer Mischeinrichtung (22) über je eine Förderleitung (4, 5, 6 bzw. 19, 20, 21) verbunden ist, wobei sämtliche Wiegebehälter in einem gemeinsamen Wiegegestell (16) der Waage angeordnet sind und die Absperrventile (23, 24, 25) in den Förderleitungen (19, 20, 21) zwischen den Wiegebehältern (7, 8, 9) und der Mischeinrichtung (22) nahe derselben angeordnet sind und wobei die Komponenten nach Feststellung des Gesamtgewichtes in den Wiegebehältern aus diesen nacheinander entsprechend ihrem Anteil am Mischungsverhältnis im Subtraktionsverfahren austragbar sind.

2. Vorrichtung nach Anspruch 1, dadurch gekennzeichnet, daß die Wiegebehälter (7, 8, 9) als geschlossene Behälter (1, 2, 3) ausgebildet und aufgabeseitig jeweils an eine Druckluftquelle (26) zum Austragen der Komponenten (I, II, III) angeschlossen sind.

3. Vorrichtung nach Anspruch 1 oder 2, dadurch gekennzeichnet, daß die Waage (18) für jede Komponente (I, II, III) eine Sollwertvorgabe aufweist, bei deren Erreichen das Absperrventil (23, 24, 25) für die entsprechende Komponente geschlossen wird.

4. Vorrichtung nach einem der Ansprüche 1 bis 3, dadurch gekennzeichnet, daß in jeder Förderleitung (4, 5, 6) zwischen dem Vorratsbehälter (1, 2, 3) und dem Wiegebehälter (7, 8, 9) Zulaufventile (13, 14, 15) und in jeder Anschlußleitung (27, 28, 29) der Wiegebehälter (7, 8, 9) an die Druckluftquelle (26) Druckluftventile (30, 31, 32) angeordnet sind, die zusammen mit den Absperrventilen (23, 24, 25) nahe der Mischeinrichtung (22) in einem Steuerkreis liegen, der für jede Komponente (I, II, III) — ggfls. programmgesteuert — zu Beginn eines Wiegevorgangs nacheinander das Absperrventil und das Druckluftventil öffnet, nach Erreichen des Sollwertes beide Ventile schließt und nach Erreichen des Sollwertes für die letzte Komponente die Zulaufventile (13, 14, 15) für alle Komponenten öffnet.

5. Vorrichtung nach einem der Ansprüche 1 bis 4, dadurch gekennzeichnet, daß die Wiegebehälter (7, 8, 9) nach jedem Dosiervorgang aus den Vorratsbehältern (1, 2, 3) aufgefüllt werden.

6. Vorrichtung nach einem der Ansprüche 1 bis 5, dadurch gekennzeichnet, daß jeder Wiegebehälter (7, 8, 9) mit einem Füllstandsmesser (33, 34, 35) als Vollmelder versehen ist.

7. Vorrichtung nach einem der Ansprüche 1 bis 5, dadurch gekennzeichnet, daß zwischen jedem Vorratsbehälter (1, 2, 3) und dem ihm zugeordneten Wiegebehälter (7, 8, 9) eine Rücklaufleitung (36, 37, 38) vorgesehen ist, und daß den Wiegebehältern (7, 8, 9) die entsprechenden Produktkomponenten (I, II, III) solange zugeführt werden, bis das Gesamtgewicht aller Komponenten (I, II, III) an der Waage (18) erreicht ist.

8. Vorrichtung nach Anspruch 7, dadurch gekennzeichnet, daß die Waage (18) einen bei Erreichen des Gesamtgewichts wirksam werdenden Endschalter zum Absperren der Förderleitungen (4, 5, 6) aufweist.

9. Vorrichtung nach einem der Ansprüche 1 bis 8, dadurch gekennzeichnet, daß jeder Wiegebehälter (7, 8, 9) mit dem entsprechenden Vorratsbehälter (1, 2, 3) über eine Druckausgleichsleitung verbunden ist.

10. Vorrichtung nach Anspruch 9, dadurch gekennzeichnet, daß als Druckausgleichsleitung die Rücklaufleitung (36, 37, 38) dient.

11. Vorrichtung nach einem der Ansprüche 1 bis 10, dadurch gekennzeichnet, daß sämtliche Leitungen (4, 5, 6 ; 19, 20, 21 bzw. 36, 37, 38) nahe den Wiegebehältern (7, 8, 9) einen horizontalen, biegsamen Leitungsabschnitt (42, 43, 44) aufweisen.

**Claims**

1. Apparatus for the gravimetric dosing of flowable product components (I, II, III), whereof at least one is a liquid, for producing mixtures with optionally varying weight proportions of the components, comprising storage containers (1, 2, 3) containing the components, a balance and shutoff valves (23, 24, 25) for interrupting the particular component flow following the weighing process, whereby for each component is provided a weighing container (7, 8, 9) and each weighing container is connected to in each case one of the storage containers (1, 2, 3) and with a mixing device (22) via in each case one feedline (4, 5, 6) or (19, 20, 21), for which purpose all the weighing containers are located in a common weighing frame (16) of the balance and the shutoff valves (23, 24, 25) are located in the feedlines (19, 20, 21) between the weighing containers (7, 8, 9) and the mixing device (22) close thereto and after establishing the total weight in the weighing containers, the components can be successively discharged therefrom in accordance with their proportion in the mixing ratio in the subtraction process.

2. Apparatus according to claim 1, characterized in that the weighing containers (7, 8, 9) are constructed as closed containers (1, 2, 3) and at the feed end are in each case connected to a compressed air source (26) for discharging the components (I, II, III).

3. Apparatus according to claims 1 or 2, characterized in that the balance (18) for each component (I, II, III) has a desired value reading and on reaching the same the shutoff valve (23, 24, 25) for the corresponding component is closed.

4. Apparatus according to one of the claims 1 to 3, characterized in that in each feedline (4, 5, 6) feed valves (13, 14, 15) are provided between the storage container (1, 2, 3) and the weighing container (7, 8, 9) and in each connecting line (27, 28, 29) of weighing containers (7, 8, 9) to the compressed air source (26) are provided compressed air valves (30, 31, 32) which, together with the shutoff valves (23, 24, 25) close to the mixing device (22) are located in a control circuit which, for each component (I, II, III) and optionally in program-controlled manner, at the start of a weighing process successively opens the shutoff valve and the compressed air valve, closes the two valves on reaching the desired value and on reaching the desired value for the last component opens the feed valves (13, 14, 15) for all the components.

5. Apparatus according to one of the claims 1 to 4, characterized in that after each dosing process, the weighing containers (7, 8, 9) are filled from the storage containers (1, 2, 3).

6. Apparatus according to one of the claims 1 to 5, characterized in that each weighing container (7, 8, 9) is provided with a level meter (33, 34, 35) as a full indicator.

7. Apparatus according to one of the claims 1 to 5, characterized in that between each storage container (1, 2, 3) and the weighing container (7, 8, 9) associated therewith is provided a return line (36, 37, 38) and that the corresponding product components (I, II, III) are supplied to the weighing containers (7, 8, 9) until the total weight of all the components (I, II, III) is reached on balance (18).

8. Apparatus according to claim 7, characterized in that the balance (18) has a limit switch which becomes effective on reaching the total weight for blocking the feedlines (4, 5, 6).

9. Apparatus according to one of the claims 1 to 8, characterized in that each weighing container (7, 8, 9) is connected to the corresponding storage container (1, 2, 3) via a pressure compensating line.

10. Apparatus according to claim 9, characterized in that the return line (36, 37, 38) is used as the pressure compensating line.

11. Apparatus according to one of the claims 1 to 10, characterized in that all the lines (4, 5, 6 ; 19, 20, 21 or 36, 37, 38) close to the weighing containers (7, 8, 9) have a horizontal, flexible line portion (42, 43, 44).

**Revendications**

1. Dispositif pour le dosage gravimétrique de constituants de produits (I, II, III) aptes à couler dont au moins l'un est un liquide, pour la réalisation de mélanges contenant éventuellement des parties en poids variables des constituants, comprenant les réservoirs de stockage (1, 2, 3) contenant les constituants, une balance ainsi que des soupapes d'arrêt (23, 24, 25) pour l'interruption de l'écoulement du constituant respectif après l'opération de pesage, un récipient de pesage (7, 8, 9) étant prévu pour chaque constituant et chaque récipient de pesage communiquant par l'intermédiaire d'une conduite de transport (4, 5, 6 voire 19, 20, 21) avec respectivement l'un des réservoirs de stockage (1, 2, 3) et avec un dispositif mélangeur (22) ; tous les récipients de pesage étant montés sur un bâti de pesage commun (16) de la balance, et les soupapes d'arrêt (23, 24, 25) étant insérées dans les conduites de transport (19, 20, 21), entre les récipients de pesage (7, 8, 9) et le dispositif mélangeur (22), à proximité de celui-ci ; et les constituants pouvant être évacués successivement des récipients de pesage, suivant le procédé soustractif et conformément à leur proportion dans le rapport de mélange, après la détermination du poids total dans les récipients de pesage.

2. Dispositif selon la revendication 1, caractérisé en ce que les récipients de pesage (7, 8, 9) sont réalisés sous la forme de réservoirs fermés (1, 2, 3) et raccordés respectivement, du côté alimentation, à une source d'air comprimé (26) pour l'évacuation des constituants (I, II, III).

3. Dispositif selon l'une des revendications 1 ou 2, caractérisé en ce que la balance (18) comporte pour chaque constituant (I, II, III) un ajusteur de la valeur de consigne dont l'atteinte provoque la fermeture de la soupape d'arrêt (23, 24, 25) pour le constituant considéré.

4. Dispositif selon l'une quelconque des revendications 1 à 3, caractérisé en ce que dans chacune des conduites de transport (4, 5, 6) sont insérées des soupapes d'arrivée (13, 14, 15), entre le réservoir de stockage (1, 2, 3) et le récipient de pesage (7, 8, 9), et que chacune des conduites de raccordement (27, 28, 29) des récipients de pesage (7, 8, 9) à la source d'air comprimé (26) comporte des valves pneumatiques (30, 31, 32) qui, conjointement avec les soupapes d'arrêt (23, 24, 25) sont insérées, à proximité du dispositif mélangeur (22), dans un circuit de commande qui — éventuellement commandé par programme — ouvre successivement, pour chaque constituant (I, II, III), la soupape d'arrêt et la valve pneumatique au début de l'opération de pesage, ferme les deux soupapes dès que la valeur de consigne est atteinte et ouvre les soupapes d'arrivée (13, 14, 15) pour tous les constituants après l'atteinte de la valeur de consigne pour le dernier constituant.

5. Dispositif selon l'une quelconque des revendications 1 à 4, caractérisé en ce que, après chaque dosage, les récipients de pesage (7, 8, 9) sont remplis à partir des réservoirs de stockage (1, 2, 3).

6. Dispositif selon l'une quelconque des revendications 1 à 5, caractérisé en ce que chaque récipient de pesage (7, 8, 9) est muni d'un indicateur de niveau (33, 34, 35) fonctionnant en tant qu'indicateur de plein.

7. Dispositif selon l'une quelconque des revendications 1 à 5, caractérisé en ce qu'une conduite de retour (36, 37, 38) est prévue entre chaque réservoir de stockage (1, 2, 3) et le récipient de pesage (7, 8, 9) qui lui est associé, et que les constituants correspondants (I, II, III) des produits sont amenés aux récipients de pesage (7, 8, 9) jusqu'à ce que le poids total de tous les constituants (I, II, III) soit atteint sur la balance (18).

8. Dispositif selon la revendication 7, caractérisé en ce que la balance (18) comprend un interrupteur de fin de course pour la fermeture des conduites de transport (4, 5, 6) qui intervient dès que le poids total est atteint.

9. Dispositif selon l'une quelconque des revendications 1 à 8, caractérisé en ce que chaque récipient de pesage (7, 8, 9) communique avec le réservoir de stockage correspondant (1, 2, 3) par l'intermédiaire d'une conduite d'égalisation de pression.

10. Dispositif selon la revendication 9, caractérisé en ce que la conduite de retour (36, 37, 38) sert de conduite d'égalisation de pression.

11. Dispositif selon l'une quelconque des revendications 1 à 10, caractérisé en ce que toutes les conduites (4, 5, 6 ; 19, 20, 21 et respectivement 36, 37, 38) comportent, à proximité des récipients de pesage (7, 8, 9), une section horizontale flexible (42, 43, 44).

0 204 936